# FASCICULE DE BREVET EUROPEEN

(11) **EP 2 354 171 B1**
(45) Date de publication et mention de la délivrance du brevet: **20.11.2013**
(21) Numéro de dépôt: 11354002.5
(22) Date de dépôt: 27.01.2011
(51) Int. Cl.: C08F 214/18, C08F 226/00, C08F 283/06, C08F 2/38, C08J 5/22

(54) **Matériau polymère fluorocarboné et procédé de synthèse**
Fluorkohlenwasserstoffhaltiges Polymer-Material, und sein Syntheseverfahren
Fluorocarbonated polymer material and synthesis method

(30) Priorité: 02.02.2010 FR 1000404
(43) Date de publication de la demande: 10.08.2011
(73) Titulaire: Commissariat à l'Énergie Atomique et aux Énergies Alternatives, 75015 Paris (FR); Centre National de la Recherche Scientifique (C.N.R.S.), 75794 Paris Cedex 16 (FR); Ecole Nationale Supérieure de Chimie de Montpellier, 34296 Montpellier Cedex 5 (FR)
(72) Inventeur: Martinent, Audrey, 38000 Grenoble (FR); Alaaeddine, Ali, Beyrouth, Liban (LB); Ameduri, Bruno, 34000 Montpellier (FR); Capron, Philippe, 38730 Virieu sur Bourbre (FR)
(74) Mandataire: Dubreu, Sandrine

(56) Documents cités:
- WO-A1-01/05578
- WO-A1-97/03931
- US-A1- 2001 024 738
- DATABASE CA [Online] CHEMICAL ABSTRACTS SERVICE, COLUMBUS, OHIO, US; 27 juillet 1995 (1995-07-27), HAYAKAWA, YOSHIO ET AL: "New perfluoropolymers bearing dialkylamino groups as side chains", XP002592173, extrait de STN Database accession no. 1995:704396
- DATABASE CA [Online] CHEMICAL ABSTRACTS SERVICE, COLUMBUS, OHIO, US; 17 novembre 1994 (1994-11-17), HEDHLI, A. ET AL: "Preparation and amphiphilic properties of cationic and amphoteric polymerizable surfactants derived from 5-F-alkyl-4-oxa-1-dimethylaminohex-5-en-2- ols", XP002592174, extrait de STN Database accession no. 1995:199751
- DATABASE CA [Online] CHEMICAL ABSTRACTS SERVICE, COLUMBUS, OHIO, US; 19 mars 1996 (1996-03-19), SAWADA, HIDEO ET AL: "Synthesis and properties of fluoroalkylated 2-acryloxyethyltrimethylammonium chloride oligomers", XP002592175, extrait de STN Database accession no. 1996:156957

## Description

### Domaine technique de l'invention

L'invention concerne un matériau polymère fluorocarboné qui comporte une chaîne principale fluorée et au moins une chaîne pendante ayant un groupement ammonium quaternaire.

La présente invention concerne également un procédé de synthèse d'un matériau polymère fluorocarboné.

### État de la technique

Les membranes échangeuses d'anion c'est-à-dire les membranes perméables aux anions ou anioniques sont couramment utilisées dans différents domaines, notamment l'électrodialyse pour le dessalement d'eaux saumâtres, le traitement des eaux et des effluents industriels, l'industrie chlore-soude et le domaine de l'électrochimie.

En particulier, certaines membranes échangeuses d'ion hydroxyde qui possèdent des groupements de type hydroxyde d'ammonium quaternaire ont une conductivité en ions suffisante pour une utilisation comme électrolyte échangeur d'ion hydroxyde pour pile à combustible alcaline aussi appelées AFC ("Alkaline Fuel Cell" en anglais). Ces membranes sont également utilisées comme matériaux d'imprégnation d'électrodes ou liant conducteur de couches catalytiques anodiques ou cathodiques de pile à combustible.

Des membranes échangeuses d'anion ont récemment été développées à partir de polymères fluorocarbonés. Parmi ces polymères, on peut citer des polymères disponibles dans le commerce sous la marque NAFION® de la société Dupont de Nemours. En particulier, des membranes échangeuses d'anion stables en milieu acide ont été décrites. Ces membranes échangeuses d'anion sont obtenues par post-fonctionnalisation c'est-à-dire par modification chimique de polymères NAFION® sulfonique et carboxylique. Elles présentent de bonnes propriétés mécaniques et une résistance élevée au vieillissement.

Matsui, K et al. ont décrit dans l'article "Novel anion exchange membranes having fluorocarbon backbone: preparation and stability", (J. Appl. Polym. Sci.,1986, n°32, P.4137-43), un schéma de synthèse qui consiste à modifier chimiquement du Nafion^{®} porteur de fonctions d'acide carboxylique pour introduire une fonction amine tertiaire puis à quaterniser la fonction amine en ammonium selon le schéma réactionnel suivant :

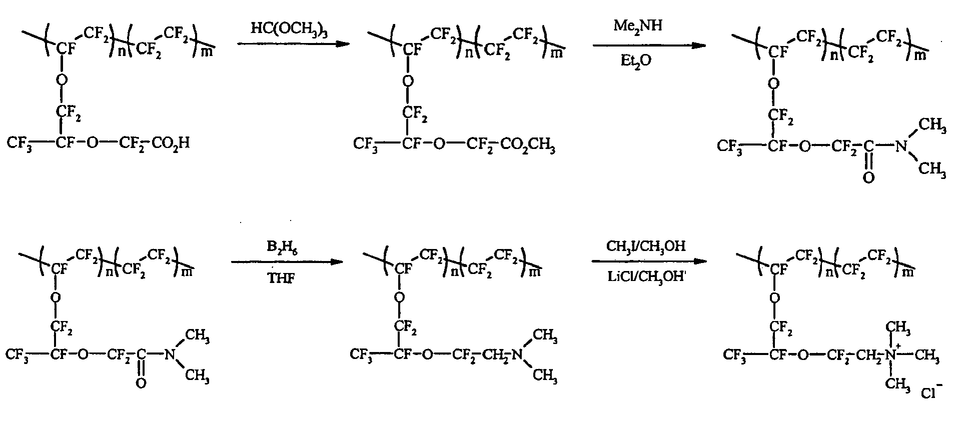

Par ailleurs, un exemple de post-fonctionnalisation d'un polymère Nafion^{®} sulfonique est décrit dans le document EP-A-0166015. Le procédé de synthèse mis en oeuvre consiste à introduire des séquences alkyles porteurs d'une fonction amine tertiaire, en condensant une diamine avec la fonction acide sulfurique du polymère Nafion^{®} sulfonique. Les fonctions amine tertiaire sont ensuite transformées en fonctions ammonium par quaternisation. Un exemple de synthèse est illustré par le schéma réactionnel suivant :

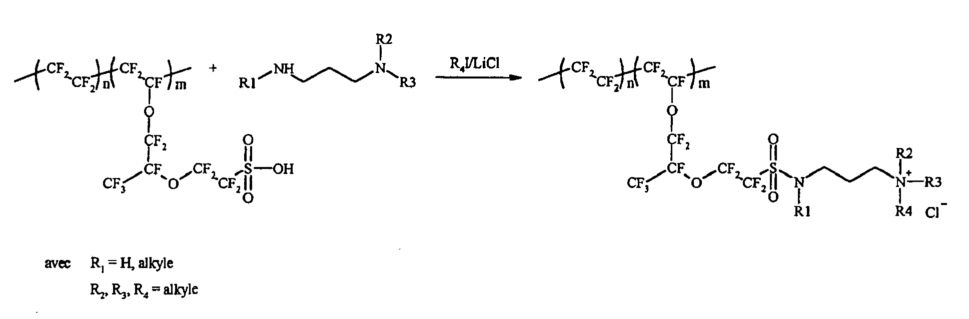

Néanmoins, les membranes échangeuses d'anion obtenues selon ces procédés de synthèse sont instables en milieu fortement basique et difficilement recyclables. D'autre part, les polymères NAFION® de départ sont coûteux et le contrôle du taux de fonctionnalisation par post-fonctionnalisation est délicat.

De récents travaux ont été effectués pour augmenter la stabilité de ces polymères en milieu basique. En particulier, Valade et al. ont décrit dans l'article "Synthesis and Modification of Alternating Copolymers Based on Vinyl Ethers, Chlorotrifluoroethylene, and Hexafluoropropylene", (Macromolecules, 2009, n°42, P.7689-7700), un polymère fluorocarboné portant un groupement ammonium quaternaire stable en milieu basique.

### Objet de l'invention

L'invention vise à remédier aux inconvénients de l'art antérieur, notamment à proposer un matériau polymère chimiquement stable en milieu alcalin et ayant de bonnes performances électrochimiques, notamment, en alliant une conduction ionique élevée et une bonne tenue mécanique.

Un autre objet de l'invention est de proposer un procédé de synthèse d'un matériau polymère fluorocarboné stable en milieu fortement basique et ayant une bonne conductivité ionique. L'invention a également pour but un procédé de synthèse industrialisable permettant de contrôler la conductivité ionique du matériau polymère.

Selon l'invention, ce but est atteint par un matériau polymère fluorocarboné et un procédé de synthèse d'un matériau polymère fluorocarboné selon les revendications annexées.

En particulier, ce but est atteint par le fait que la chaîne principale comporte un motif de formule générale (1) suivante : 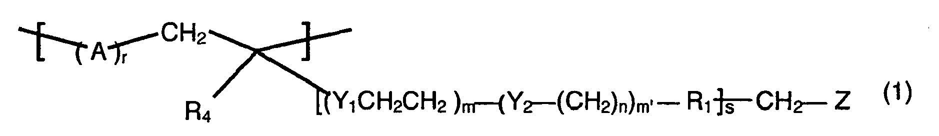 dans laquelle :
Z est un groupement ammonium quaternaire,
Y₁ et Y₂ sont chacun indépendamment un hétéroatome d'oxygène ou de soufre,
A est une chaîne linéaire, fluorée ou perfluorée, ayant de 2 à 6 atomes de carbone,
R₁ représente un groupement phényle, aryle ou un groupement de formule (2) suivante :

   -CR₂R₃ - (2)

   dans laquelle :
   R₂ et R₃ sont identiques ou différents et choisis chacun indépendamment parmi le groupe constitué par un groupement alkyle, linéaire ou ramifié, éventuellement substitué par un ou plusieurs halogènes,

R₄ est choisi parmi le groupe constitué par un atome d'hydrogène, un groupement alkyle ou alkyle halogéné, linéaire ou ramifié, cyclique ou acyclique et un groupement représenté par la formule (3) suivante :

—— [Y₁CH₂CH₂)ₘ——(Y₂-(CH₂)ₙ)_{m'}—— R₁]ₛ——CH₂—— Z (3)

m est un entier compris entre 0 et 10, de préférence entre 0 et 3 ;
m', n et r sont des entiers, chacun indépendamment égal à 0 ou 1 ; et
s est égal à 0 ou 1, à la condition que quand s vaut 0 alors R₄ est différent de l'atome d'hydrogène.

Selon un développement de l'invention, A est représentée par la formule (4) suivante : 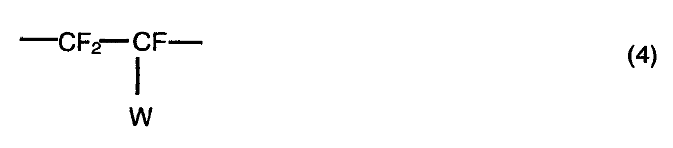 dans laquelle :
W représente un atome de fluor, brome, chlore, un groupement -CF₃ ou un groupement -OCᵤF₂ᵤ₊₁ où u est égal à 1, 2 ou 3.

Ce but est également atteint par un procédé de synthèse d'un matériau polymère fluorocarboné qui comporte une étape de copolymérisation d'au moins :
- un premier monomère choisi parmi les monomères vinyliques fluorés,
- un second monomère représenté par la formule (9) suivante : 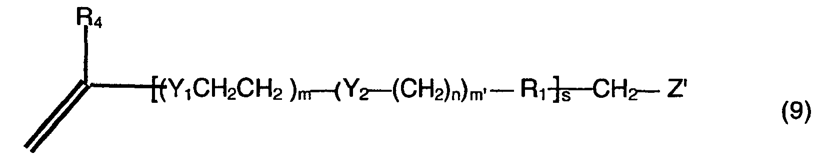 dans laquelle
   Z' représente un groupement ammonium quaternaire ou un halogène, ledit halogène étant, de préférence, un atome de chlore ou d'iode,
   Y₁ et Y₂ sont chacun indépendamment un hétéroatome d'oxygène ou de soufre,
   R₁ représente un groupement phényle, aryle ou un groupement de formule (2) :

   -CR₂R₃ - (2)

   dans laquelle :
   R₂ et R₃ sont identiques ou différents et choisis chacun indépendamment parmi le groupe constitué par un groupement alkyle, linéaire ou ramifié,
   éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (10) suivante :

—— [(Y₁CH₂CH₂ )ₘ―(Y₂―(CH₂)ₙ)ₘ―R₁]ₛ―CH₂―Z' (10)

m est un entier compris entre 0 et 10, de préférence entre 0 et 3 ;
m' et n sont des entiers, chacun indépendamment égal à 0 ou 1 ; et
s est égal à 0 ou 1, à la condition que quand s vaut 0 alors R₄ est différent de l'atome d'hydrogène.

### Description des modes de réalisation particuliers de l'invention

Selon un mode particulier de réalisation, un matériau polymère fluorocarboné comporte une chaîne principale fluorée et au moins une chaîne pendante ayant un groupement ammonium quaternaire. La chaîne principale comporte un motif de formule générale (1) suivante : 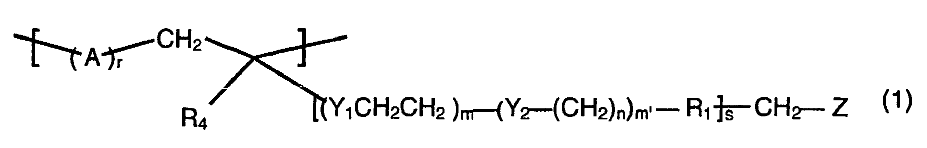 Dans laquelle :
Z est un groupement ammonium quaternaire,
Y₁ et Y₂ sont chacun indépendamment un hétéroatome d'oxygène ou de soufre,
A est une chaîne linéaire, fluorée ou perfluorée, ayant de 2 à 6 atomes de carbone,
R₁ représente un groupement phényle, aryle ou un groupement de formule (2) suivante :

   -CR₂R₃ - (2)

   dans laquelle :
   R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (3) suivante :

—— [(Y₁CH₂CH₂)ₘ―(Y₂―(CH₂)ₙ)ₘ―R₁]ₛ―CH_{2―}Z (3)

m est un entier compris entre 0 et 10, de préférence entre 0 et 3 ;
m', n et r sont des entiers, chacun indépendamment égal à 0 ou 1 ; et
s est égal à 0 ou 1, à la condition que quand s vaut 0 alors R₄ est différent de l'atome d'hydrogène.

On entend par chaîne pendante, une chaîne constituée par au moins deux chaînons et liée à la chaîne principale par liaison covalente. Dans la formule (1), la chaîne dont la formule (3) est décrite ci-dessus constitue une chaîne pendante.

Le motif représenté à la formule générale (1) s'intercale au moins une fois dans la chaîne principale fluorée du matériau polymère fluorocarboné. Le motif peut s'intercaler plusieurs fois, avantageusement, de façon périodique. La périodicité et le nombre de motif dans la chaîne principale sont des paramètres qui interviennent sur la valeur de la conductivité en ion hydroxyde (noté "OH⁻") et sur les propriétés mécaniques d'un matériau polymère fluorocarboné.

De préférence, A est représentée par la formule (4) suivante : 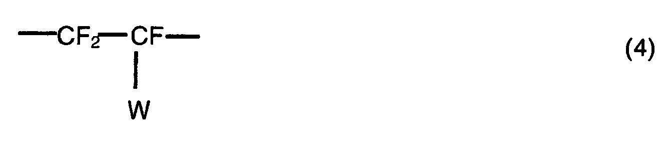 dans laquelle :
W représente un atome de fluor, brome, chlore, un groupement -CF₃ ou un groupement -OCᵤF₂ᵤ₊₁ où u est égal à 1, 2 ou 3.

La chaîne principale comporte le groupement A de formule (4) décrite ci-dessus. La chaîne principale est, avantageusement, une chaîne linéaire fluorée.

Par ailleurs, la nature du substituant W, dans le groupement A de formule (4), peut permettre d'intervenir sur la solubilité du matériau polymère fluorocarboné et sur sa résistance thermique et chimique. W permet d'augmenter le caractère hydrophobe du polymère et la stabilité en milieu basique.

Les matériaux polymères ayant des groupements fonctionnels de type ammonium quaternaire présentent l'avantage d'être plus stables thermiquement et chimiquement que les groupements phosphoniums et sulfoniums quaternaires. Néanmoins, la présence de fonctions ammoniums quaternaires peut induire ou favoriser ia dégradation du polymère, en particulier, en milieu alcalin. En effet, lorsqu'il existe un atome d'hydrogène sur le carbone en position bêta, noté C_{β}, du groupement ammonium quaternaire, le matériau polymère peut subir une dégradation par chauffage, basée sur la réaction d'élimination d'Hoffman suivante : 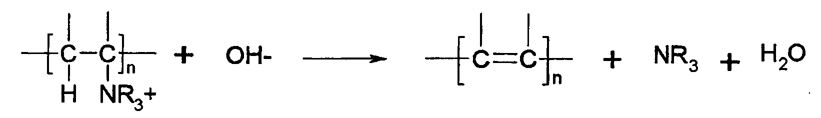 avec R étant un groupement alkyle, éventuellement, substitué.

Dans ce cas, l'acidité du proton en position bêta est augmentée par la charge positive du groupement ammonium quaternaire. La réaction d'élimination d'Hoffman entraîne l'élimination d'une amine tertiaire et la création d'une oléfine.

Par ailleurs, une réaction de substitution nucléophile peut également survenir en milieu fortement basique selon le schéma réactionnel suivant :

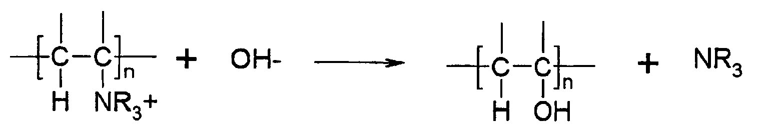

Les matériaux polymères fluorocarbonés de formule générale (1) sont particulièrement stables en milieu basique. Cette stabilité s'explique notamment par le fait que le carbone C_{β} du groupement ammonium quaternaire Z ne possède pas d'atome d'hydrogène.

Selon un mode de réalisation préférentiel, le groupement Z du matériau polymère fluorocarboné de formule générale (1) décrit ci-dessus est choisi parmi les ammoniums quaternaires de formule (5) suivante :

— N⁺R₅R₆R₇ , X⁻ (5)

dans laquelle :
R₅, R₆ et R₇ sont des substituants, identiques ou différents, choisis chacun indépendamment parmi le groupe constitué par un groupement alkyle, linéaire ou ramifié, cyclique ou acyclique, lesdits substituants R₅, R₆ et R₇ pouvant ensemble avec l'atome d'azote auquel ils sont liés constituer un groupement hétérocyclique de 4 à 7 chaînons et ayant, éventuellement, un second hétéroatome choisi parmi un atome d'azote, d'oxygène ou de soufre ; et
X- est un contre-ion hydroxyde ou halogénure, de préférence chlorure ou iodure.

Les substituants R₅, R₆ et R₇ de la formule (5) sont choisis de sorte que le groupement ammonium quaternaire est stable en milieu fortement alcalin. Un choix judicieux des substituants R₅, R₆ et R₇ est réalisé pour éviter la réaction de substitution nucléophile décrite ci-dessus, du groupement ammonium quaternaire par les groupements hydroxydes.

En particulier, lorsque le groupement ammonium quaternaire Z est en position terminale benzylique c'est-à-dire lorsque dans la formule (1), s=1 et R₁ est un groupement phényle ou aryle, on choisira avantageusement un groupement Z connu pour être stable en milieu alcalin, par exemple, le groupement 4,4'-diazabicyclo-[2.2.2]-octane de formule suivante :

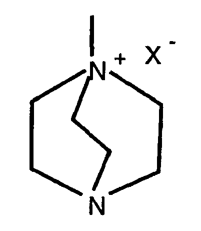

De même, Z est, de préférence, un substituant 4,4'-diazabicyclo-[2.2.2]-octane pour les matériaux polymères fluorocarboné de formule (1) dans laquelle :
- s=1,
- m, m' et n valent zéro ; et ,
- R₁ est un groupement phényle ou aryle.

Selon un particulier mode de réalisation, la chaîne principale du matériau polymère fluorocarboné comporte au moins un motif représenté par la formule (6) suivante : 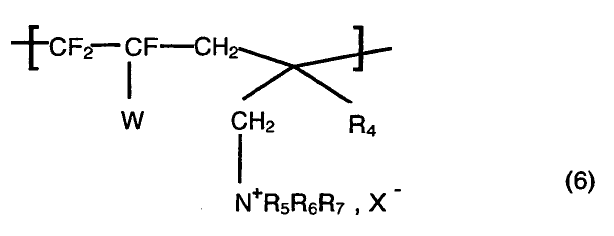 dans laquelle :
W représente un atome de fluor, brome, chlore, un groupement -CF₃ ou un groupement -OCᵤF₂ᵤ₊₁ où u est égal à 1, 2 ou 3,
R₅, R₆ et R₇ sont des substituants, identiques ou différents, choisis chacun indépendamment parmi le groupe constitué par un groupement alkyle, linéaire ou ramifiée, cyclique ou acyclique, lesdits substituants R₅, R₆ et R₇ pouvant ensemble avec l'atome d'azote auquel ils sont liés constituer un groupement hétérocyclique de 4 à 7 chaînons et ayant, éventuellement, un second hétéroatome choisi parmi un atome d'azote, d'oxygène ou de soufre ;
X- est un contre-ion hydroxyde ou halogénure, de préférence chlorure ou iodure ; et
R₄ est choisi parmi le groupe constitué par un groupement alkyle ou alkyle halogéné, linéaire ou ramifié, cyclique ou acyclique et un groupement ―CH₂― N⁺R₅R₆R₇, X⁻.

La formule (6) diffère de la formule générale (1) en ce que s=0. La chaîne pendante est un groupement méthylène ammonium quaternaire. Dans ce cas particulier, R₄ doit être différent d'un atome d'hydrogène pour ne pas introduire une instabilité du matériau polymère fluorocarboné en milieu alcalin du fait de la possibilité d'une réaction d'élimination d'Hoffman comme décrit ci-dessus.

En particulier, la chaîne principale du matériau polymère fluorocarboné peut comporter au moins un motif représenté par la formule (7) suivante : 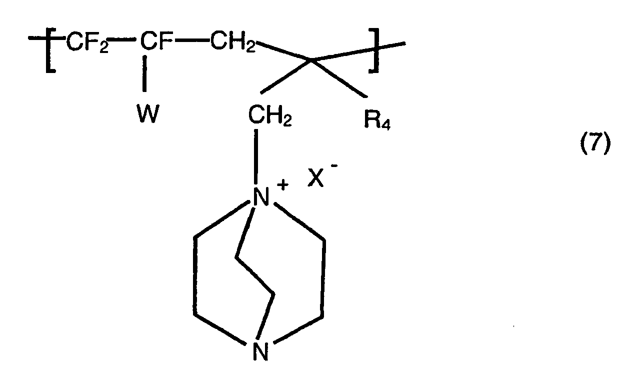 dans laquelle
W représente un atome de fluor, brome, chlore, un groupement -CF₃ ou un groupement -OCᵤF₂ᵤ₊₁ où u est égal à 1, 2 ou 3,
X- est un contre-ion hydroxyde ou halogénure, de préférence chlorure ou iodure ; et
R₄ est choisi parmi le groupe constitué par un groupement alkyle ou alkyle halogéné, linéaire ou ramifié, cyclique ou acyclique et un groupement représenté par la formule (8) suivante :

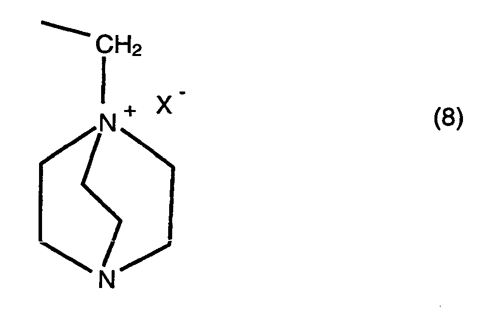

Selon un autre mode particulier de réalisation, la chaîne pendante du matériau polymère fluorocarboné comporte au moins un hétéroatome Y₁ et/ou Y₂ choisi parmi l'oxygène ou le soufre. Le matériau polymère fluorocarboné a alors une formule (1) avec s est égal à 1. L'introduction d'un hétéroatome dans la chaîne pendante et, en particulier, l'introduction d'un oxygène peut, dans certains cas, augmenter le caractère hydrophile du matériau polymère fluorocarboné et, par conséquent, peut être un moyen de jouer sur la solubilité du matériau polymère fluorocarboné notamment pour le rendre plus ou moins soluble dans différents solvants. De même, la présence d'un hétéroatome peut modifier les propriétés mécaniques du polymère, en particulier, augmenter la souplesse du matériau polymère fluorocarboné.

Par ailleurs, un ou plusieurs bras espaceurs de type méthoxy, éthoxy, thiométhylène, thioéthylène, oligo(oxyéthylène) et/ou oligo(thioéthylène) peuvent être introduits dans la chaîne pendante pour éloigner le groupement ammonium quaternaire Z de la chaîne principale fluorocarbonée du matériau polymère et augmenter éventuellement le caractère hydrophile du matériau polymère fluorocarboné et sa souplesse. Pour obtenir un tel matériau polymère fluorocarboné avec un bras espaceur, on choisira dans la formule (1):
- s est égal à 1 et m est un entier compris entre 1 et 5, de préférence égal à 1, 2 ou 3 et/ou ;
- s et m' sont égaux à 1.

La présence d'un bras espaceur peut, avantageusement, diminuer les interactions entre la chaîne pendante et la chaîne principale, rendant la fonction plus réactive.

Les matériaux polymères fluorocarbonés décrits peuvent, avantageusement, être utilisés comme membrane échangeuse d'anion. En particulier, on trouve une application particulièrement avantageuse de ces matériaux polymères fluorocarbonés comme liant ou comme électrolyte pour pile à combustible alcaline lorsque le contre-ion X⁻ est un hydroxyde.

Selon un mode particulier de réalisation, un procédé de synthèse d'un matériau polymère fluorocarboné comporte une étape de copolymérisation d'au moins :
- un premier monomère choisi parmi les monomères vinyliques fluorés et,
- un second monomère représenté par la formule (9) suivante : 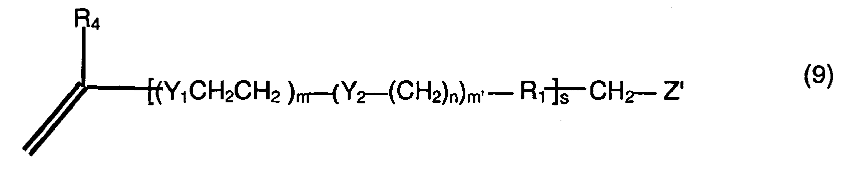
dans laquelle
Z' représente un groupement ammonium quaternaire ou un halogène, ledit halogène étant, de préférence, un atome de chlore ou d'iode,
Y₁ et Y₂ sont chacun indépendamment un hétéroatome d'oxygène ou de soufre,
R₁ représente un groupement phényle, aryle ou un groupement de formule (2) :

-CR₂R₃- (2)

dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (10) suivante:

———— [(Y₁CH₂CH₂ )ₘ―(Y₂―(CH₂)ₙ)_{m'}—— R₁]ₛ―CH₂― Z' (10)

m est un entier compris entre 0 et 10, de préférence entre 0 et 3 ;
m' et n sont des entiers, chacun indépendamment égal à 0 ou 1 ; et
s est égal à 0 ou 1, à la condition que quand s vaut 0 alors R₄ est différent de l'atome d'hydrogène.

La copolymérisation est, avantageusement, une copolymérisation radicalaire. La copolymérisation est réalisée selon tout procédé connu, classiquement en présence d'un amorceur comme le péroxypivalate de t-butyle noté "TBPPI" qui est un amorceur thermique.

Le matériau polymère fluorocarboné ainsi obtenu comporte une chaîne principale fluorée et au moins une chaîne pendante ayant un groupement Z'. La chaîne principale du matériau polymère fluorocarboné ainsi obtenu peut comporter le motif de formule générale (1) décrit ci-dessus lorsque Z' est un groupement ammonium quaternaire.

Lorsque le premier monomère est un monomère vinylique fluoré, on obtient un matériau polymère fluorocarboné ayant une chaîne linéaire A fluorocarbonée.

Le premier monomère peut, avantageusement, être choisi parmi les monomères vinyliques perfluorés.

Selon un autre mode particulier de réalisation, le premier monomère est un monomère vinylique fluoré représenté par la formule (11) suivante : 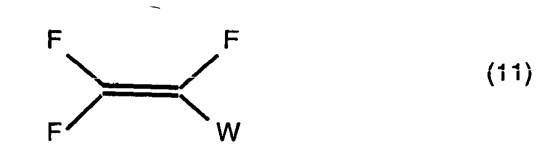 dans laquelle :
W représente un atome de fluor, brome, chlore, un groupement -CF₃ ou un groupement -OCᵤF₂ᵤ₊₁ où u est égal à 1, 2 ou 3.

Selon un mode de réalisation préférentiel, le premier monomère est le chlorotrifluoroéthylène noté "CTFE". L'introduction du CTFE dans un polymère apporte de l'insolubilité dans l'eau et de la stabilité en milieu alcalin. Le CTFE polymérisé donne, généralement, des polymères à caractère hydrophobe, résistants thermiquement et chimiquement aux acides et aux bases et qui possèdent de bonnes propriétés mécaniques. En polymérisant le CTFE avec le second monomère, on peut ainsi obtenir différents matériaux polymères fluorocarbonés avec des propriétés telles que le caractère hydrophile, la réticulation, la souplesse et la conductivité d'ion hydroxyde.

Selon un mode particulier de réalisation, le second monomère est représenté par la formule (12) suivante : 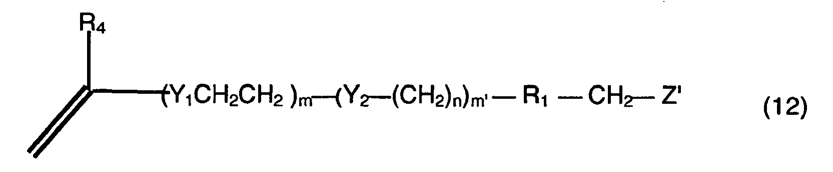 dans laquelle
Z' représente un groupement ammonium quaternaire ou un halogène, ledit halogène étant, de préférence, un atome de chlore ou d'iode,
Y₁ et Y₂ sont chacun indépendamment un hétéroatome d'oxygène ou de soufre,
R₁ représente un groupement phényle, aryle ou un groupement de formule (2) :

-CR₂R₃- (2)

dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (13) suivante :

——— (Y₁CH₂CH₂)ₘ―(Y₂―(CH₂)ₙ)_{m'}— R₁ ― CH₂― Z' (13)

m est un entier compris entre 0 et 10, de préférence entre 0 et 3 ; et
m' et n sont des entiers, chacun indépendamment égal à 0 ou 1.

Le second monomère est, de préférence, un éther vinylique ou un thioéther vinylique représenté par la formule (14) suivante : 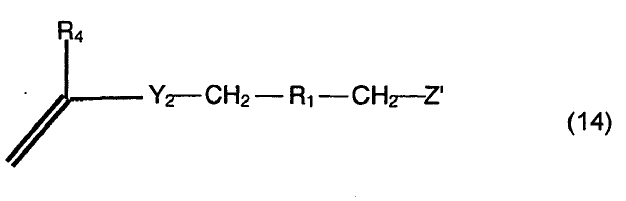 dans laquelle
Z' représente un groupement ammonium quaternaire ou un halogène, ledit halogène étant, de préférence, un atome de chlore ou d'iode,
Y₂ est un atome d'oxygène ou de soufre,
R₁ représente un groupement phényle, aryle ou un groupement de formule (2) :

-CR₂R₃ - (2)

dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,

R₄ est choisi parmi le groupe constitué par un atome d'hydrogène, un groupement alkyle ou alkyle halogéné, linéaire ou ramifié, cyclique ou acyclique et un groupement représenté par la formule (15) suivante :

— Y₂—CH_{2―}R₁—CH₂—Z' (15)

dans laquelle Z', Y₂ et R₁ sont tels que définis ci-dessus.

Le second monomère est, avantageusement, choisi parmi les éthers vinyliques de formule (12) où chaque Y₁ et Y₂ est un atome d'oxygène. Les éthers vinyliques présentent l'avantage de ne pas homopolymériser par voie radicalaire. En outre, le CTFE copolymérise, avantageusement, avec les éthers vinyliques de façon alternée. Cette particularité provient du caractère accepteur du CTFE (e = 1,56), et de celui, donneur, des éthers vinyliques (-2,0 < e < -1,5).

Selon un mode particulier de réalisation, Z' représente dans la formule (12) du second monomère, un atome d'halogène, de préférence, un atome de chlore ou d'iode. L'étape de copolymérisation peut dans ce cas, avantageusement, être suivie par une étape de post-fonctionnalisation du matériau polymère fluorocarboné issu de l'étape de copolymérisation. Cette post-fonctionnalisation correspond à une réaction entre une amine tertiaire et le matériau polymère fluorocarboné iodé ou fluoré issu de ladite étape de copolymérisation.

L'amine tertiaire est, de préférence, choisie parmi la triméthylamine, la triéthylamine, le 1,4-diazabicyclo[2.2.2]octane notée "DABCO" et l'amine tertiaire de formule NR₅R₆R₇ où R_{5;} R₆ et R₇ sont des substituants identiques ou différents, choisis chacun indépendamment parmi un groupement alkyle, linéaire ou ramifié, cyclique ou acyclique.

Selon une variante, les substituants R₅, R₆ et R₇ peuvent constituer ensemble avec l'atome d'azote auquel ils sont liés un groupement hétérocyclique de 4 à 7 chaînons et ayant, éventuellement, un second hétéroatome choisi parmi un atome d'azote, d'oxygène ou de soufre.

À titre d'exemple illustrant un mode particulier de réalisation, un premier procédé de synthèse consiste en trois étapes successives suivantes :
Etape 1 : Synthèse du second monomère par quaternisation d'une amine tertiaire 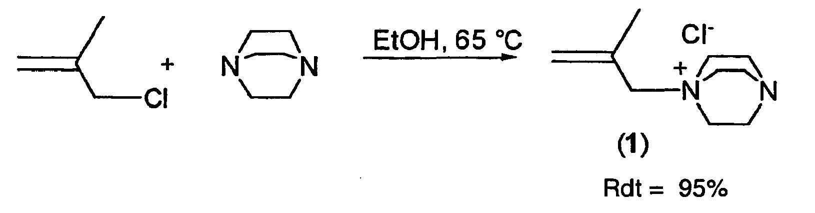
Etape 2 : Copolymérisation radicalaire du CTFE avec le second monomère méthallyle (1) porteur d'un groupement ammonium quaternaire 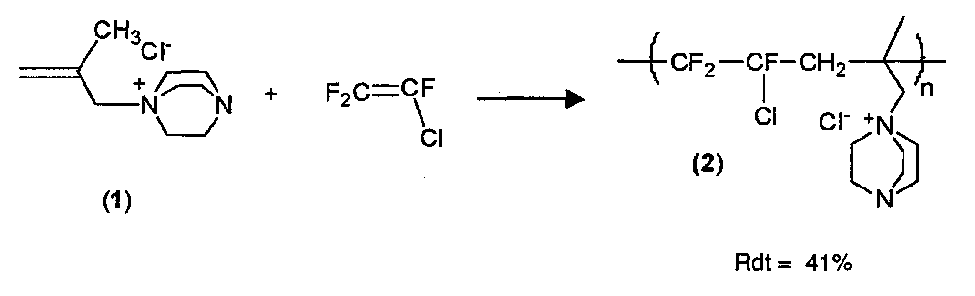
Etape 3 : Réaction d'échange du contre-ion chlorure par un ion hydroxyde

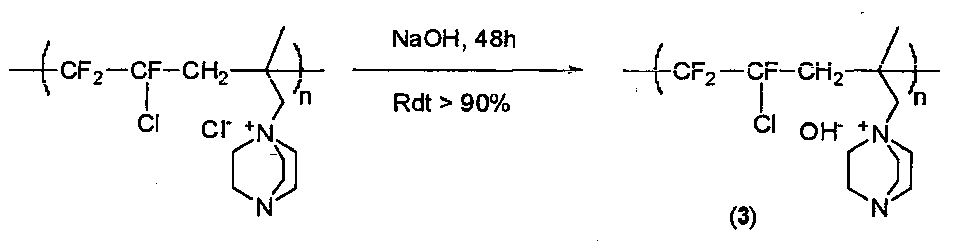

Selon une variante, le procédé de synthèse consiste en trois étapes successives suivantes :
Etape 1 : Synthèse du second monomère 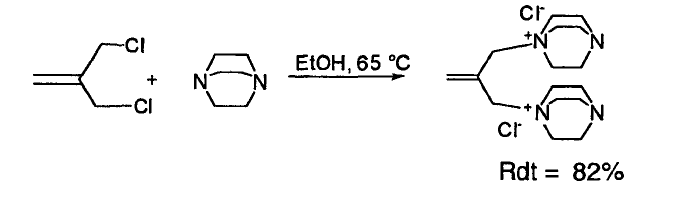
Etape 2 : copolymérisation radicalaire 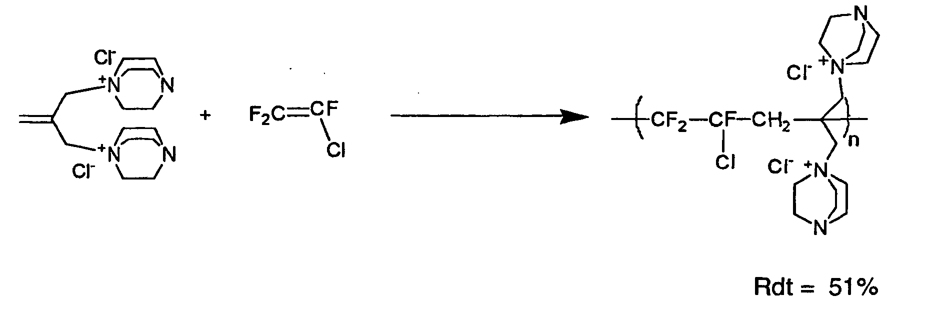 Etape 3 : Réaction d'échange du contre-ion chlorure par un ion hydroxyde

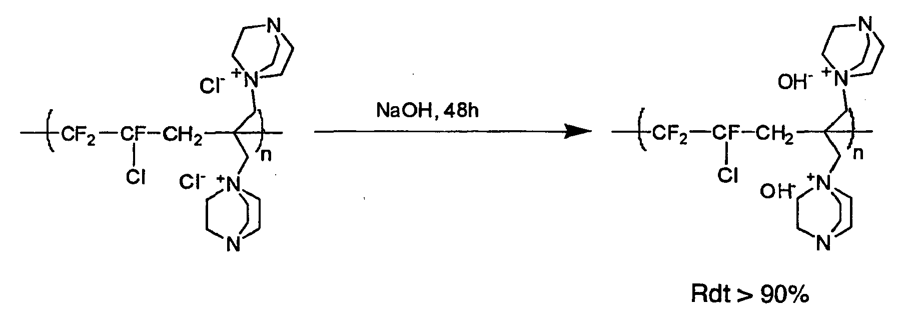

À titre d'exemple illustrant un autre mode de réalisation particulier, un second procédé de synthèse consiste en trois étapes successives suivantes :
Etape 1 : Synthèse du second monomère 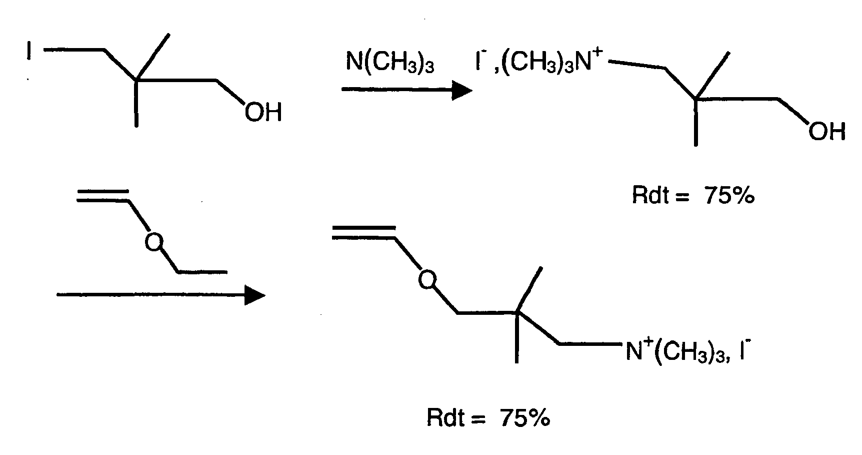
Etape 2 : copolymérisation radicalaire 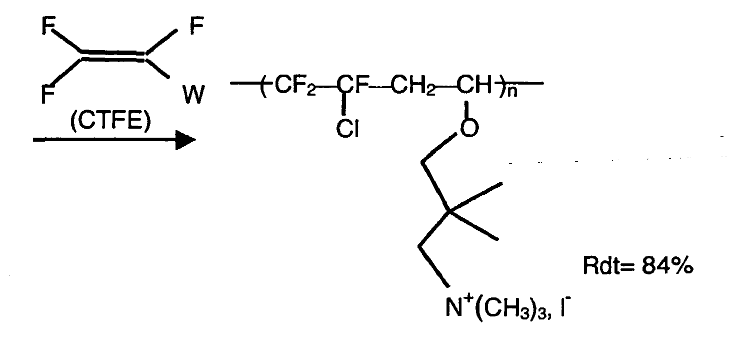
Etape 3 : Réaction d'échange du contre-ion iodure par un ion hydroxyde.

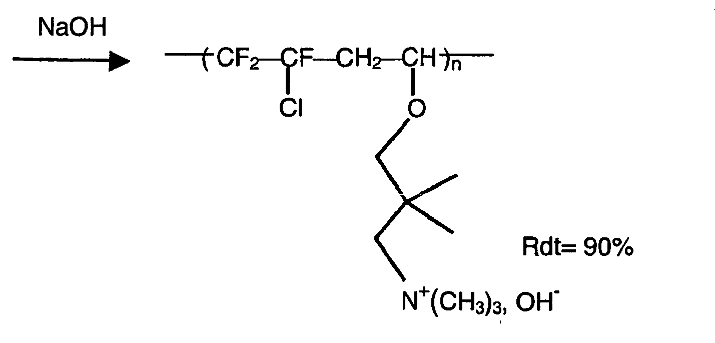

À titre d'exemple illustrant un autre mode de réalisation particulier, un troisième procédé de synthèse consiste en quatre étapes successives suivantes :
Etape 1 : Synthèse du second monomère 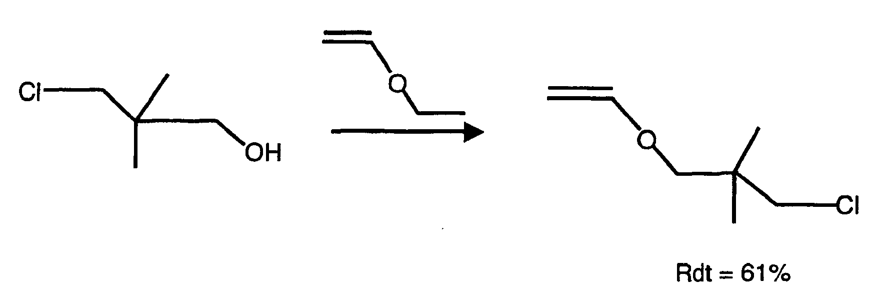
Etape 2 : copolymérisation radicalaire 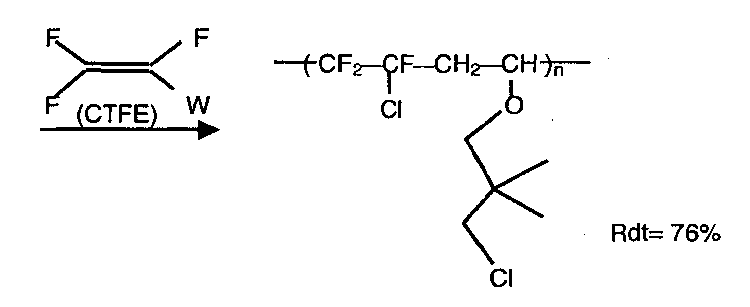
Etape 3 : post-fonctionnalisation du matériau polymère fluorocarboné obtenu 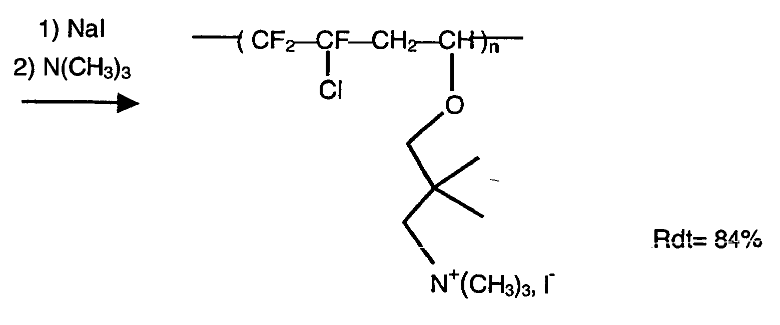
Etape 4 : Réaction d'échange du contre-ion iodure par un ion hydroxyde

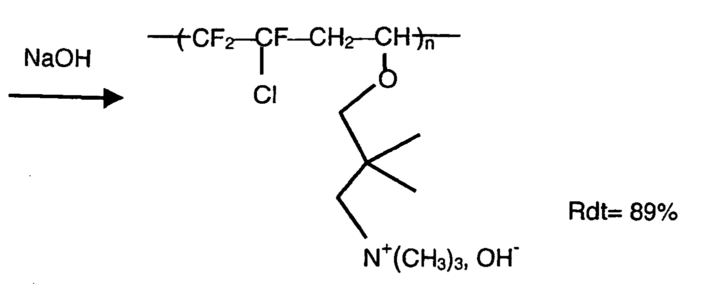

### EXEMPLE

### Exemple 1:

### - Synthèse du chlorure de 2-méthyl-3-[4-diazabicyclo[2.2.2]octyl]-prop-1-ène (1)

Le 3-chloro-2-méthyl-1-propène (40.00 g, 0.44 mol) est solubilisé dans de l'éthanol anhydre (200 mL). Une solution de 1,4-diazabicyclo[2.2.2]octane (DABCO) (49.55 g, 0.44 mol) dans de l'éthanol (100 mL) y est ensuite ajoutée. Le milieu réactionnel est agité à 65°C pendant 48h. Après refroidissement, le solvant est évaporé et le milieu obtenu est précipité dans l'éther. Le solide blanc obtenu est lavé plusieurs fois avec de l'éther (300 mL) puis séché sous vide pour donner 85 g du second monomère 1 sous forme d'une poudre blanche (Rdt : 95%).

### - Copolymérisation radicalaire du CTFE avec le second monomère méthallyle (1) porteur un groupement ammonium quaternaire

Le CTFE étant gazeux, les copolymérisations ont été réalisées en autoclave sous pression. Cet autoclave, muni d'un manomètre, d'une vanne d'entrée, d'un agitateur magnétique, d'un disque de sécurité, subit un test de pression avec 30 bars d'azote. Une fois l'azote évacué, le réacteur est placé sous vide pendant 25 min puis le monomère 1, un amorceur TBPPI mélangé avec un tensioactif, le perfluorooctanoate d'ammonium noté "AFPO", et 50 mL d'un mélange acétonitrile/eau/1,1,1,3,3-pentafluorobutane formant le solvant puis le chlorotrifluoroéthylène sont successivement introduits. L'autoclave est régulé par chauffage et placé sur un agitateur mécanique chauffant à 75 °C pendant 15 h. Au cours de la copolymérisation, se produit d'abord une augmentation de la pression à l'intérieur du réacteur, due à l'expansion du gaz lié à la montée de température. On observe ensuite une diminution de la pression provoquée par la conversion du premier monomère fluoré gazeux (CTFE) en matériau polymère. Après réaction et refroidissement, le réacteur est laissé dans de la glace pendant 30 min puis dégazé. La conversion de gaz est calculée par (m-δm)/m où m et δm désignent, respectivement, les masses de CTFE de départ et la différence de masse avant et après dégazage. δm = 0 signifie que le taux de conversion du CTFE est 100%. Après ouverture du réacteur, le milieu est extrait 2 fois avec 200 ml de 2-butanone et la phase organique est évaporée sous vide. Le produit est dissout dans le chloroforme puis précipité dans du méthanol à température ambiante afin d'éliminer les restes de solvant, monomères, amorceurs et oligomères. La solution est filtrée et le matériau polymère fluorocarboné est ensuite placé dans une étuve sous vide à 50 °C pour être séché pendant la nuit. On obtient le matériau polymère fluorocarboné sous forme d'une poudre blanche (Rdt = 41 % et taux de conversion = 53%).

### - Réaction d'échange du contre-ion chlorure par un ion hydroxyde

Le polymère est plongé dans une solution de soude 1 M, sous agitation pendant 48h. Le polymère est lavé plusieurs fois avec de l'eau et séché sous vide à 50°C. Le rendement est supérieur à 95 %.

### Exemple 2:

Synthèse du chlorure de 2.3-bis-[4-diazabicvcio[2.2.2]octvi]-isobut-1-ène : le second monomère est synthétisé selon une procédure identique à celle de l'exemple 1 décrite précédemment, en partant du 3-chloro-2-chlorométhyl-1-propène (5.0 g, 0.04 mol) et de 2 équivalents de 1,4-diazabicyclo[2.2.2loctane (DABCO) (8,90 g, 0.08 mol) dans l'éthanol anhydre (50 mL). Le solide blanc obtenu est précipité et lavé avec de l'éther (25 mL) pour donner 11,5 g du 2-3-bis-[4-diazabicyclo[2.2.2]octyl]-isobut-1-ène (Rdt : 82%). La copolymérisation et la réaction d'échange sont réalisées selon une procédure identique à l'exemple 1 avec des rendements, respectivement, de 51% et 95 %.

### Exemple 3 :

- Synthèse du 3-iodo-(2.2-diméthyl)-1-propanol : du 3-chloro-(2,2-diméthyl)-1-propanol est solubilisé dans l'acétone anhydre. 3 équivalents d'iodure de sodium sont ensuite introduits dans le ballon que l'on place dans un bain d'huile, sur un agitateur chauffant. Le milieu réactionnel est agité à 65 °C pendant 7 jours. Le milieu réactionnel est ensuite filtré, pour éliminer le chlorure de sodium formé et séché sous vide. Le résidu obtenu est distillé sous vide pour donner le 3-iodo-(2,2-diméthyl)-1-propanol sous forme d'une poudre blanche.

- Synthèse du iodure de 3-[*N*, *N*, *N*-triméthylammonium]-(2.2-diméthylpropyl)-vinyléther à partir du 3-iodo-(2.2-diméthylpropyl)-vinyléther : dans un réacteur de 100 mL, le 3-iodo-(2,2-diméthyl)-1-propanol obtenu est solubilisé dans de l'acétone. 3 éq. de triméthylamine sont ajoutés, puis la réaction est portée à reflux pendant 48 h. Le produit est séché par évaporation de l'amine et de l'acétone pour conduire à une poudre blanche correspondant au iodure de 3-[*N, N, N*-triméthylammonium]-(2,2-diméthyl)- 1-propanol.

Dans un Schlenk, de l'acétate de palladium (0,89 g, 4.01 mmol) est solubilisé dans le dichlorométhane (25 mL). Une solution de 1-phénanthroline (1,08 g, 6.09 mmol) dans du dichlorométhane (10 mL) y est ensuite ajoutée. Le milieu réactionnel est agité à température ambiante pendant 30 minutes pour générer *in situ* le catalyseur de palladium. Une solution composée d'iodure de 3-[N, *N, N-*triméthylammonium]-(2,2-diméthyl)-1-propanol (24,5 g, 0,095 mol) et d'éthyl vinyl éther (43,40 g, 0,60 mol) est ajoutée à la solution puis le milieu réactionnel est introduit dans un autoclave. Cette solution est chauffée à 60 °C pendant 24h. Après évaporation sous vide puis distillation sous vide du résidu, on obtient l'iodure de 3-[*N, N, N-*triméthylammonium]-(2,2-diméthylpropyl)-vinyléther sous forme d'un liquide incolore (65-70 °C/ 0,30 mmHg) avec un rendement de 75%.

La copolymérisation radicalaire du CTFE avec le iodure de 3-[/\/,/V,/V-triméthylammonium]-(2,2-diméthylpropyl)-vinyléther et la réaction d'échange sont réalisées selon une procédure identique à l'exemple 1 à l'exception que l'iodure de 3-[*N,N,N* triméthylammonium]-(2,2-diméthylpropyl)-vinyléther est introduit dans le réacteur sous vide avec du TBPPI, du K₂CO₃, 50 mL de 1,1,1,3,3-pentafluorobutane et du chlorotrifluoroéthylène et qu'après polymérisation, le réacteur est ouvert et le brut de la polymérisation est dissous dans de l'acétone puis précipité dans le méthanol afin d'éliminer les restes de solvant, les monomères, K₂CO₃, l'amorceur et les oligomères. Les rendements de la copolymérisation radicalaire et de la réaction d'échange sont, respectivement, de 84% et 90%.

### Exemple 4 :

- Synthèse de 3-chloro-(2,2-diméthylpropyl)-vinyléther par une réaction de transéthérification d'éthyl vinyl éther : Dans un Schlenk, l'acétate de palladium (1.09 g, 4.88 mmol) est solubilisé dans du dichlorométhane (25 mL). Une solution de 1-phénanthroline (1,32 g, 7.43 mmol) dans de le dichlorométhane (10 mL) y est ensuite ajoutée. Le milieu réactionnel est agité à température ambiante pendant 30 minutes pour générer *in situ* le catalyseur de palladium. Une solution composée de 3-chloro-2,2-diméthyl-1-propanol (30 g, 0,22 mol) et d'éthyl vinyl éther (52,93g, 0,73 mol) est ajoutée à la solution puis le milieu réactionnel est introduit dans un autoclave. Le milieu réactionnel est chauffé à 60 °C pendant 24h. Le dichlorométhane et l'éthyl vinyl éther sont ensuite évaporés sous vide et le résidu obtenu est distillé sous vide pour donner le monomère sous forme d'un liquide incolore (85 °C, 25 mmHg) avec un rendement de 61%.

- Copolymérisation du CTFE avec le 3-chloro-(2.2-diméthylpropyl)-vinyléther: La copolymérisation radicalaire est réalisée selon une procédure identique à l'exemple 3 avec un rendement de 76%.

- Modification chimique et réaction d'échange des contre-ions chlorures par des ions hydroxydes : le polymère est solubilisé dans l'acétone dans un ballon équipé d'un réfrigérant. Ensuite, 3 équivalents d'iodure de sodium sont introduits dans le ballon que l'on place dans un bain d'huile, sur un agitateur chauffant. La réaction dure sept jours, à reflux. Le polymère est ensuite filtré, précipité dans le méthanol afin d'enlever Nal et NaCl puis séché sous vide, à 50 °C. Puis, dans un réacteur, le polymère iodé obtenu est solubilisé dans de l'acétone. La triméthylamine (3 éq / sites iodés du polymère) est ajoutée puis la réaction est portée à 40 °C, pendant 24h puis à reflux pendant 24h. Le polymère est séché par évaporation de l'amine et de l'acétone. Le polymère est plongé dans une solution de soude 1 M, sous agitation pendant 48h. Le polymère est lavé plusieurs fois avec de l'eau et séché sous vide à 50 ° C. Le polymère sous forme de poudre brun est obtenu avec de rendement supérieur à 90%.

Les résultats des exemples sont répertoriés dans le tableau ci-dessous.

**TABLEAU: MATERIAUX POLYMERES FLUOROCARBONES OBTENUS PAR COPOLYMERISATION DU CTFE AVEC UN SECOND MONOMERE**

| **N° procédé de synthèse / n° ex.** | **second monomère** | **Rendement second monomère (%)** | **Rendement polymérisation (%) / Taux de conversion (%)** | **Capacité d'échange ionique (meq.g⁻¹)** |
|---|---|---|---|---|
| 1^{ier} /1 | 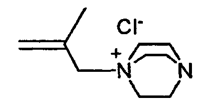 | 95 | 41/53 | 1,22 |
| 1^{ier} /2 | 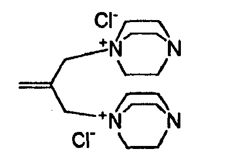 | 82 | 51/60 | 2,17 |
| 2^{ième} /3 | 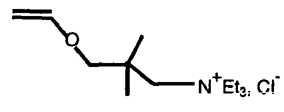 | 75 | 84/90 | 3,15 |
| 1^{ier}/4 | 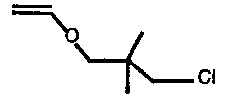 | 61 | 76/95 | 3,27 |

Selon un mode de réalisation particulier préférentiel, le matériau polymère fluorocarboné de formule (1) peut être synthétisé par les procédés de synthèse d'un matériau polymère fluorocarboné décrits ci-dessus. Une large gamme de matériaux polymères fluorocarbonés peuvent ainsi être préparée présentant des masses molaires et de teneurs en ammonium quaternaire variables ouvrant la voie à divers liants ou membranes ayant des propriétés thermiques, physicochimiques et électrochimiques distinctes.

Par ailleurs, le procédé de synthèse selon l'invention permet de contrôler le taux de fonctionnalisation du matériau polymère fluorocarboné et sa solubilité dans différents solvants, notamment les solvants polaires. Le procédé de synthèse est simple à mettre en oeuvre et permet l'obtention de différents matériaux polymères fluorocarbonés stables en milieu alcalin, peu coûteux, insolubles dans l'eau et plus facilement dégradables que les membranes NAFION^{®} de l'art antérieur.

En outre, le caractère hydrophobe du matériau polymère fluorocarboné de l'invention en fait un matériau adapté à une application comme membrane échangeuse d'anion en particulier comme liant et/ou électrolyte de pile à combustible alcaline.

## Revendications

1. Matériau polymère fluorocarboné qui comporte une chaîne principale fluorée et au moins une chaîne pendante ayant un groupement ammonium quaternaire, **caractérisé en ce que** la chaîne principale comporte un motif de formule générale (1) suivante : 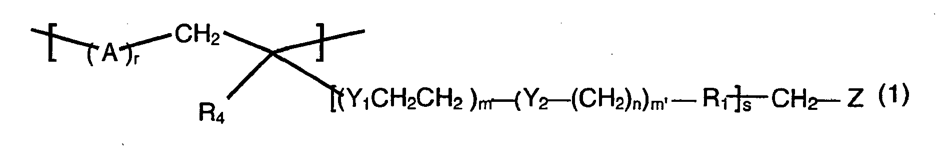 dans laquelle :
Z est un groupement ammonium quaternaire,
Y₁ et Y₂ sont chacun indépendamment un hétéroatome d'oxygène ou de soufre,
A est une chaîne linéaire, fluorée ou perfluorée, ayant de 2 à 6 atomes de carbone,
R₁ représente un groupement phényle, aryle ou un groupement de formule (2) suivante :
-CR₂R₃- (2)
dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (3) suivante : 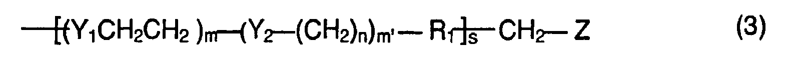
m est un entier compris entre 0 et 10, de préférence entre 0 et 3 ;
m', n et r sont des entiers, chacun indépendamment égal à 0 ou 1 ; et
s est égal à 0 ou 1, à la condition que quand s vaut 0 alors R₄ est différent de l'atome d'hydrogène.

2. Matériau polymère fluorocarboné selon la revendication 1, caractérisé en que A est représentée par la formule (4) suivante : 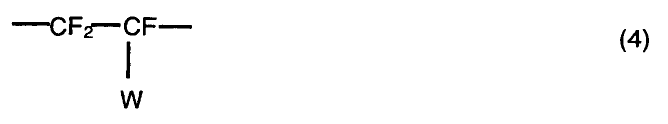 dans laquelle :
W représente un atome de fluor, brome, chlore, un groupement -CF₃ ou un groupement -OCᵤF₂ᵤ₊₁ où u est égal à 1, 2 ou 3.

3. Matériau polymère fluorocarboné selon l'une des revendications 1 et 2, **caractérisé en ce que** Z est choisi parmi les ammoniums quaternaires de formule (5) suivante :
- N⁺R₅R₆R₇ , X⁻ (5)
dans laquelle :
R₅, R₆ et R₇ sont des substituants, identiques ou différents, choisis chacun indépendamment parmi le groupe constitué par un groupement alkyle, linéaire ou ramifié, cyclique ou acyclique, lesdits substituants R₅, R₆ et R₇ pouvant ensemble avec l'atome d'azote auquel ils sont liés constituer un groupement hétérocyclique de 4 à 7 chaînons et ayant, éventuellement, un second hétéroatome choisi parmi un atome d'azote, d'oxygène ou de soufre ; et
X⁻ est une contre-ion hydroxyde ou halogénure, de préférence chlorure ou iodure.

4. Matériau polymère fluorocarboné selon l'une quelconque des revendications 1 à 3, **caractérisé en ce que** la chaîne principale comporte au moins un motif représenté par la formule (6) suivante : 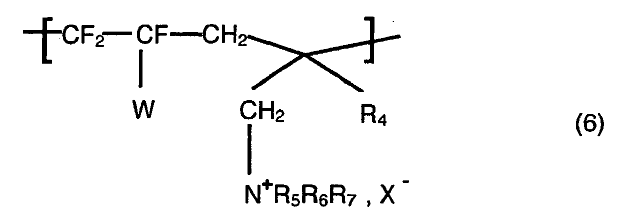 dans laquelle :
W représente un atome de fluor, brome, chlore, un groupement -CF₃ ou un groupement -OCᵤF₂ᵤ₊₁ où u est égal à 1, 2 ou 3,
R₅, R₆ et R₇ sont des substituants, identiques ou différents, choisis chacun indépendamment parmi le groupe constitué par un groupement alkyle, linéaire ou ramifié, cyclique ou acyclique, lesdits substituants R₅, R₆ et R₇ pouvant ensemble avec l'atome d'azote auquel ils sont liés constituer un groupement hétérocyclique de 4 à 7 chaînons et ayant, éventuellement, un second hétéroatome choisi parmi un atome d'azote, d'oxygène ou de soufre ; X⁻ est un contre-ion hydroxyde ou halogénure, de préférence chlorure ou iodure ; et
R₄ est choisi parmi le groupe constitué par un groupement alkyle ou alkyke halogéné, linéaire ou ramifié, cyclique ou acyclique et un groupement -CH₂- N⁺R₅R₆R₇ , X⁻.

5. Matériau polymère fluorocarboné selon la revendication 4, **caractérisé en ce que** la chaîne principale comporte au moins un motif représenté par la formule (7) suivante : 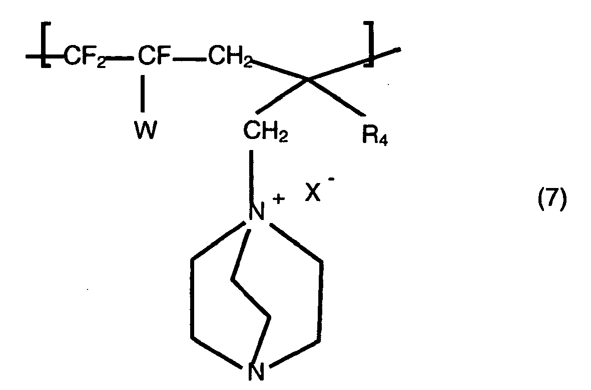 dans laquelle
W représente un atome de fluor, brome, chlore, un groupement -CF₃ ou un groupement -OCᵤF₂ᵤ₊₁ où u est égal à 1, 2 ou 3,
X⁻ est un contre-ion hydroxyde ou halogénure, de préférence chlorure ou iodure; et
R₄ est choisi parmi le groupe constitué par un groupement alkyle ou alkyle halogéné, linéaire ou ramifié, cyclique ou acyclique et un groupement représenté par la formule (8) suivante :

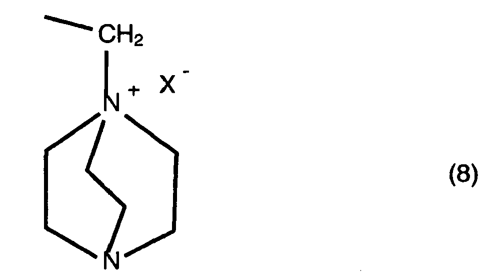

6. Procédé de synthèse d'un matériau polymère fluorocarboné selon l'une quelconque des revendications 1 à 5, **caractérisé en ce qu'**il comporte une étape de copolymérisation d'au moins :
- un premier monomère choisi parmi les monomères vinyliques fluorés et,
- un second monomère représenté par la formule (9) suivante : 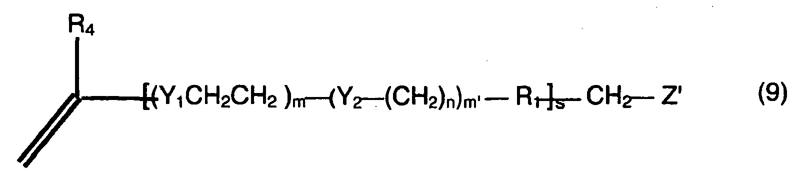 dans laquelle
Z' représente un groupement ammonium quaternaire,
Y₁ et Y₂ sont chacun indépendamment un hétéroatome d'oxygène ou de soufre,
R₁ représente un groupement phényle, aryle ou un groupement de formule (2) :
-CR₂R₃ - (2)
dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (10) suivante : 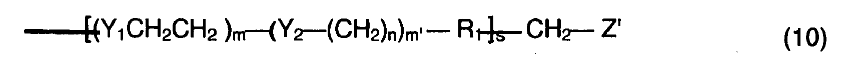 m est un entier compris entre 0 et 10, de préférence entre 0 et 3 ;
m' et n sont des entiers, chacun indépendamment égal à 0 ou 1 ; et
s est égal à 0 ou 1, à la condition que quand s vaut 0 alors R₄ est différent de l'atome d'hydrogène.

7. Procédé de synthèse d'un matériau polymère fluorocarboné selon l'une quelconque des revendications 1 à 5, **caractérisé en ce qu'**il comporte une étape de copolymérisation d'au moins :
- un premier monomère choisi parmi les monomères vinyliques fluorés et,
- un second monomère représenté par la formule (9) suivante : 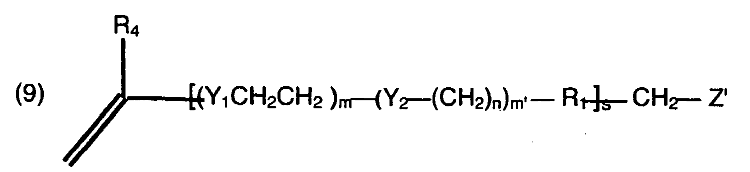 dans laquelle
Z' représente un halogène,ledit halogène étant, de préférence, un atome de chlore ou d'iode,
Y₁ et Y₂ sont chacun indépendamment un hétéroatome d'oxygène ou de soufre,
R₁ représente un groupement phényle, aryle ou un groupement de formule (2) :
-CR₂R₃- (2)
dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (10) suivante : 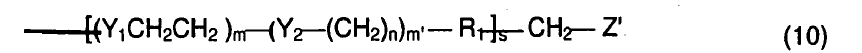 m est un entier compris entre 0 et 10, de préférence entre 0 et 3 ;
m' et n sont des entiers, chacun indépendamment égal à 0 ou 1 ; et
s est égal à 0 ou 1, à la condition que quand s vaut 0 alors R₄ est différent de l'atome d'hydrogène,
l'étape de copolymérisation étant suivie d'une étape de post-fonctionnalisation du matériau polymère fluorocarboné issu de l'étape de copolymérisation, avec une amine tertiaire.

8. Procédé selon la revendication 7, **caractérisé en ce que** l'amine tertiaire est choisie parmi la triméthylamine, la triéthylamine, le 1,4-diazabicyclo[2.2.2]octane notée "DABCO" et l'amine tertiaire de formule NR₅R₆R₇, où R₅, R₆ et R₇ sont des substituants identiques ou différents, choisis chacun indépendamment parmi un groupement alkyle, linéaire ou ramifié, cyclique ou acyclique.

9. Procédé selon la revendication 7, **caractérisé en ce que** l'amine tertiaire est l'amine tertiaire de formule NR₅R₆R₇ où R₅, R₆ et R₇ constituent ensemble avec l'atome d'azote auquel ils sont liés un groupement hétérocyclique de 4 à 7 chaînons et ayant, éventuellement, un second hétéroatome choisi parmi un atome d'azote, d'oxygène ou de soufre.

10. Procédé selon l'une quelconque des revendications 6 à 9, **caractérisé en ce que** la copolymérisation est une copolymérisation radicalaire.

11. Procédé selon l'une quelconque des revendications 6 à 10, **caractérisé en ce que** le premier monomère est un monomère vinylique fluoré représenté par la formule (11) suivante : 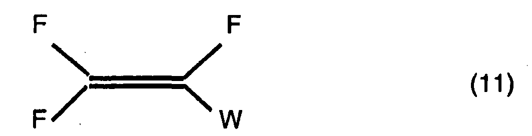 dans laquelle :
W représente un atome de fluor, brome, chlore, un groupement -CF₃ ou un
groupement -OCᵤF₂ᵤ₊₁ où u est égal à 1, 2 ou 3.

12. Procédé selon l'une quelconque des revendications 6 à 11, **caractérisé en ce que** le second monomère est représenté par la formule (12) suivante : 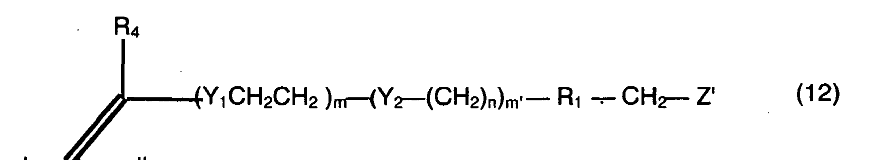 dans laquelle
Z' représente un groupement ammonium quaternaire ou un halogène, ledit halogène étant, de préférence, un atome de chlore ou d'iode,
Y₁ et Y₂ sont chacun indépendamment un hétéroatome d'oxygène ou de soufre,
R₁ représente un groupement phényle, aryle ou un groupement de formule (2) :
-CR₂R₃- (2)
dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (13) suivante : 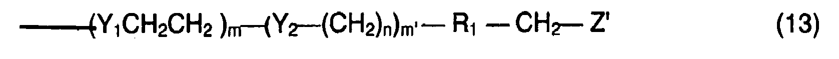 m est un entier compris entre 0 et 10, de préférence entre 0 et 3 ; et
m' et n sont des entiers, chacun indépendamment égal à 0 ou 1.

13. Procédé selon la revendication 12, **caractérisé en ce que** le second monomère est choisi parmi les éthers vinyliques, où chaque Y₁ et Y₂ est un atome d'oxygène.

14. Procédé selon l'une quelconque des revendications 6 à 13, **caractérisé en ce que** le second monomère est un éther vinylique représenté par la formule (14) suivante : 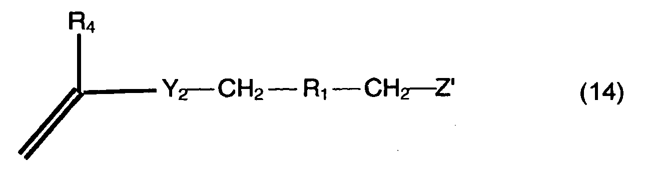 dans laquelle
Z' représente un groupement ammonium quaternaire ou un halogène, ledit halogène étant, de préférence, un atome de chlore ou d'iode,
Y₂ est un hétéroatome d'oxygène ou de soufre,
R₁ représente un groupement phényle, aryle ou un groupement de formule (2) :
-CR₂R₃- (2)
dans laquelle :
R₂ et R₃ sont identiques ou différents et choisis chacun indépendamment parmi le groupe constitué par un groupement alkyle, linéaire ou ramifié, éventuellement substitué par un ou plusieurs halogènes,
R₄ est choisi parmi le groupe constitué par un atome d'hydrogène, un groupement alkyle ou alkyle halogéné, linéaire ou ramifié, cyclique ou acyclique et un groupement représenté par la formule (15) suivante :
-Y₂-CH₂-R₁-CH₂-Z' (15)
dans laquelle Z', Y₂ et R₁ sont tels que définis ci-dessus.

15. Utilisation d'un matériau polymère fluorocarboné selon l'une quelconque des revendications 1 à 5, comme membrane échangeuse d'anion.

## Patentansprüche

1. Fluorkohlenstoffhaltiges Polymermaterial, das eine fluorierte Hauptkette und mindestens eine Nebenkette mit einer quartären Ammoniumgruppe aufweist, **dadurch gekennzeichnet, dass** die Hauptkette ein Muster mit der folgenden allgemeinen Formel (1) aufweist: 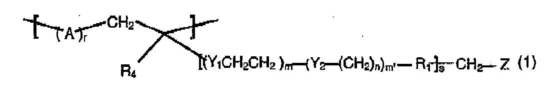 in welcher:
Z eine quartäre Ammoniumgruppe ist,
Y₁ und Y₂ jeweils unabhängig ein Sauerstoff- oder Schwefelheteroatom darstellen,
A eine lineare fluorierte oder perfluorierte Kette mit 2 bis 6 Kohlenstoffatomen ist,
R₁ eine Phenyl-, Arylgruppe oder eine Gruppe mit der folgenden Formel (2) darstellt:
-CR₂R₃- (2)
in welcher:
R₂ und R₃ identisch oder verschieden sind und jeweils unabhängig aus der Gruppe bestehend aus einer linearen oder verzweigten Alkylgruppe, möglicherweise mit einem oder mehreren Halogenen substituiert, ausgewählt sind,
R₄ aus der Gruppe bestehend aus einem Wasserstoffatom, einer Alkyl- oder halogenisierten Alkylgruppe, linear oder verzweigt, zyklisch oder azylklisch, und einer durch die folgende Formel (3) dargestellten Gruppe ausgewählt ist: 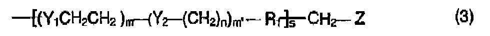
m eine ganze Zahl zwischen 0 und 10, vorzugsweise zwischen 0 und 3 ist;
m', n und r ganze Zahlen sind, jeweils unabhängig voneinander gleich 0 oder 1; und
s gleich 0 oder 1 ist, unter der Bedingung, dass, wenn s 0 ist, R₄ dann verschieden von dem Wasserstoffatom ist.

2. Fluorkohlenstoffhaltiges Polymermaterial gemäß Anspruch 1, **dadurch gekennzeichnet, dass** A durch die folgende Formel (4) dargestellt wird: 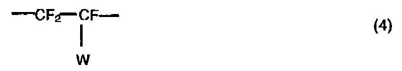 in der:
W ein Fluor-, Brom-, Chloratom, eine Gruppe -CF₃ oder eine Gruppe-OCᵤF₂ᵤ₊₁ darstellt, wobei u gleich 1, 2 oder 3 ist.

3. Fluorkohlenstoffhaltiges Polymermaterial gemäß einem der Ansprüche 1 und 2, **dadurch gekennzeichnet, dass** Z aus den quartären Ammoniumarten der folgenden Formel (5) ausgewählt ist:
- N⁺R₅R₆R₇, X⁻ (5)
in welcher:
R₅, R₆ und R₇ identische oder verschiedene Substituenten sind, die jeweils unabhängig aus der Gruppe bestehend aus einer linearen oder verzweigten, zyklischen oder azyklischen Alkylgruppe ausgewählt sind, wobei die Substituenten R₅, R₆ und R₇ zusammen mit dem Stickstoffatom, an das sie gebunden sind, eine heterozyklische Gruppe von 4 bis 7 Kettengliedern bilden und möglicherweise ein zweites Heteroatom ausgewählt aus einem Stickstoff-, Sauerstoff- oder Schwefelatom aufweisen; und
X⁻ ein Hydroxid- oder Halogenid-, vorzugsweise Chlorid- oder lodid-Gegenion ist.

4. Fluorkohlenstoffhaltiges Polymermaterial gemäß einem der Ansprüche 1 bis 3, **dadurch gekennzeichnet, dass** die Hauptkette mindestens ein durch die folgende Formel (6) dargestelltes Muster aufweist: 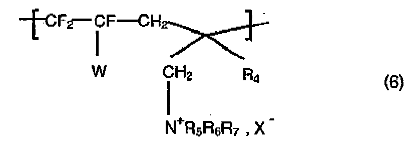 in welcher:
W eine Fluor-, Brom-, Chloratom, eine Gruppe -CF₃ oder eine Gruppe-OCᵤF₂ᵤ₊₁ darstellt, wobei u gleich 1, 2 oder 3 ist, R₅, R₆ und R₇ identische oder verschiedene Substituenten, jeweils unabhängig ausgewählt aus der durch eine lineare oder verzweigte, zyklische oder azyklische Alkylgruppe gebildete Gruppe, wobei die Substituenten R₅, R₆ und R₇ zusammen mit dem Stickstoffatom, an das sie gebunden sind, eine heterozyklische Gruppe von 4 bis 7 Kettengliedern bilden und möglicherweise ein zweites Heteroatom ausgewählt aus einem Stickstoff-, Sauerstoff- oder Schwefelatom aufweisen;
X⁻ ein Hydroxid- oder Halogenid-, vorzugsweise Chlorid- oder Iodid-Gegenion ist; und
R₄ aus der Gruppe bestehend aus einer Alkyl- oder halogenisierten Alkylgruppe, linear oder verzweigt, zyklisch oder azyklisch und einer Gruppe-CH₂-N⁺R₅R₆R₇, X⁻ ausgewählt ist.

5. Fluorkohlenstoffhaltiges Polymermaterial gemäß Anspruch 4, **dadurch gekennzeichnet, dass** die Hauptkette mindestens ein durch die folgende Formel (7) dargestelltes Muster aufweist: 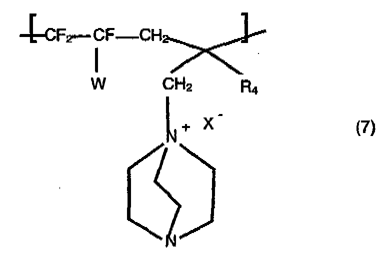 in welcher
W eine Fluor-, Brom-, Chloratom, eine Gruppe -CF₃ oder eine Gruppe-OCᵤF₂ᵤ₊₁ darstellt, wobei u gleich 1, 2 oder 3 ist,
X⁻ ein Hydroxid- oder Halogenid-, vorzugsweise Chlorid- oder Iodid-Gegenion ist; und
R₄ aus der Gruppe bestehend aus einer Alkyl- oder halogenisierten Alkylgruppe, linear oder verzweigt, zyklisch oder azyklisch und einer durch die Formel (8) dargestellten Gruppe ausgewählt ist:

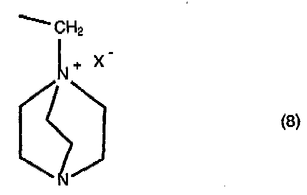

6. Syntheseverfahren eines fluorkohlenstoffhaltigen Polymermaterials gemäß einem der Ansprüche 1 bis 5, **dadurch gekennzeichnet, dass** es einen Kopolymerisationsschritt umfasst mit mindestens:
- einem ersten Monomer ausgewählt aus den fluorisierten Vinylmonomeren und
- einem zweiten Monomer, das durch die folgende Formel (9) dargestellt ist: 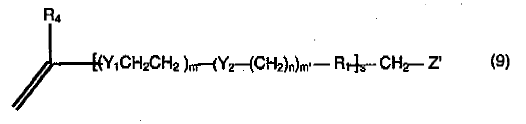 in der
Z' eine quartäre Ammoniumgruppe darstellt,
Y₁ und Y₂ jeweils unabhängig ein Sauerstoff- oder Schwefelheteroatom sind, R₁ eine Phenyl-, Arylgruppe oder eine Gruppe der Formel (2) darstellt:
-CR₂R₃- (2)
in der:
R₂ und R₃ identisch oder verschieden sind und jeweils unabhängig aus der Gruppe bestehend aus einer linearen oder verzweigten Alkylgruppe, möglicherweise substituiert mit einem oder mehreren Halogenen, ausgewählt sind,
R₄ aus der Gruppe bestehend aus einem Wasserstoffatom, einer Alkyl- oder halogenisierten Alkylgruppe, linear oder verzweigt, zyklisch oder azyklisch, und einer durch die folgende Formel (10) dargestellten Gruppe ausgewählt ist: 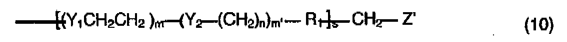 m eine ganze Zahl zwischen 0 und 10, vorzugsweise zwischen 0 und 3 ist;
m' und n ganze Zahlen sind, jeweils unabhängig gleich 0 oder 1; und
s gleich 0 oder 1 ist, unter der Bedingung, dass, wenn s gleich 0 ist, R₄ dann verschieden von dem Wasserstoffatom ist.

7. Syntheseverfahren eines fluorkohlenstoffhaltigen Polymermaterials gemäß einem der Ansprüche 1 bis 5, **dadurch gekennzeichnet, dass** es einen Kopolymerisationsschritt mit mindestens:
- einem ersten Monomer ausgewählt aus den fluorisierten Vinylmonomeren und
- einem zweiten Monomer, dargestellt durch die folgende Formel (9): 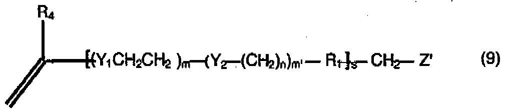 in welcher
Z' ein Halogen darstellt, wobei das Halogen vorzugsweise ein Chlor- oder Iodatom ist,
Y₁ und Y₂ jeweils unabhängig ein Sauerstoff- oder Schwefelheteroatom sind, R₁ eine Phenyl-, Arylgruppe oder eine Gruppe der Formel (2) darstellt:
-CR₂R₃- (2)
in der:
R₂ und R₃ identisch oder verschieden sind und jeweils unabhängig aus der Gruppe bestehend aus einer linearen oder verzweigten Alkylgruppe, möglicherweise substituiert mit einem oder mehreren Halogenen, ausgewählt sind,
R₄ aus der Gruppe bestehend aus einem Wasserstoffatom, einer Alkyl- oder halogenisierten Alkylgruppe, linear oder verzweigt, zyklisch oder azyklisch, und einer durch die folgende Formel (10) dargestellten Gruppe ausgewählt ist: 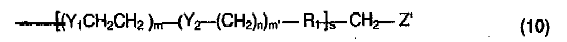 m eine ganze Zahl zwischen 0 und 10, vorzugsweise zwischen 0 und 3 ist;
m' und n ganze Zahlen sind, jeweils unabhängig gleich 0 oder 1; und
s gleich 0 oder 1 ist, unter der Bedingung, dass, wenn s gleich 0 ist, R₄ dann kein Wasserstoffatom ist,
wobei auf den Kopolymerisationsschritt ein Nachfunktionalisierungsschritt des aus dem Kopolymerisationsschritt hervorgegangenen, fluorkohlenstoftttaltigen Polymermaterials mit einem tertiären Amin folgt.

8. Verfahren gemäß Anspruch 7, **dadurch gekennzeichnet, dass** das tertiäre Amin aus Trimethylamin, Triethylamin, 1,4-Diazybicyclo[2.2.2]Oktan mit der Bezeichnung "DABCO" und tertiärem Amin mit der Formel NR₅R₆R₇ ausgewählt ist, wobei R₅, R₆ und R₇ identische oder verschiedene Substituenten sind, die jeweils unabhängig aus einer linearen oder verzweigten, zyklischen oder azyklischen Alkylgruppe ausgewählt sind.

9. Verfahren gemäß Anspruch 7, **dadurch gekennzeichnet, dass** das tertiäre Amin tertiäres Amin der Formel NR₅,R₆R₇ ist, wobei R₅,R₆ und R₇ zusammen mit dem Stickstoffatom, mit dem sie verbunden sind, eine heterozyklische Gruppe von 4 bis 7 Kettengliedern bilden und möglicherweise ein zweites Heteroatom ausgewählt aus einem Stickstoff-, Sauerstoff- oder Schwefelatom aufweisen.

10. Verfahren gemäß einem der Ansprüche 6 bis 9, **dadurch gekennzeichnet, dass** die Kopolymerisation eine radikalartige Kopolymerisation ist.

11. Verfahren gemäß einem der Ansprüche 6 bis 10, **dadurch gekennzeichnet, dass** das erste Monomer ein fluorisiertes Vinylmonomer ist, das durch die folgende Formel (11) dargestellt ist: 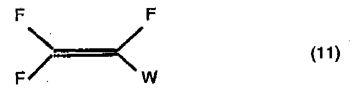 in welcher:
W ein Fluor-, Brom-, Chloratom, eine Gruppe -CF₃ oder eine Gruppe-OCᵤF₂ᵤ₊₁ darstellt, wobei u gleich 1, 2 oder 3 ist.

12. Verfahren gemäß einem der Ansprüche 6 bis 11, **dadurch gekennzeichnet, dass** das zweite Monomer durch die folgende Formel (12) dargestellt ist: 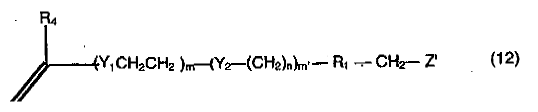 in der
Z' eine quartäre Ammoniumgruppe oder ein Halogen darstellt, wobei das Halogen vorzugsweise ein Chlor- oder Iodatom ist,
Y₁ und Y₂ jeweils unabhängig ein Sauerstoff- oder Schwefelheteroatom sind, R₁ eine Phenyl- Arylgruppe oder eine Gruppe der Formel (2) darstellt:
-CR₂R₃- (2)
in welcher:
R₂ und R₃ identisch oder verschieden sind und jeweils unabhängig aus der Gruppe bestehend aus einer linearen oder verzweigten Alkylgruppe, möglicherweise substituiert mit einem oder mehreren Halogenen, ausgewählt sind,
R₄ aus der Gruppe bestehend aus einem Wasserstoffatom, einer Alkyl- oder halogenisierten Alkylgruppe, linear oder verzweigt, zyklisch oder azyklisch, und einer durch die folgende Formel (13) dargestellten Gruppe ausgewählt ist:
-(Y₁CH₂CH₂)ₘ-(Y₂-(CH₂)ₙ)_{m'}- R₁ -CH₂- Z' (13)
m eine ganze Zahl zwischen 0 und 10, vorzugsweise zwischen 0 und 3 ist; und
m' und n ganze Zahlen, jeweils unabhängig gleich 0 oder 1 sind.

13. Verfahren gemäß Anspruch 12, **dadurch gekennzeichnet, dass** das zweite Monomer aus den Vinylethern ausgewählt ist, wobei Y₁ und Y₂ jeweils ein Sauerstoffatom ist.

14. Verfahren gemäß einem der Ansprüche 6 bis 13, **dadurch gekennzeichnet, dass** das zweite Monomer ein Vinylether dargestellt durch die folgende Formel (14) ist: 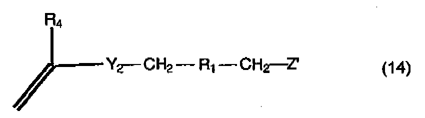 in der
Z' eine quartäre Ammoniumgruppe oder ein Halogen darstellt, wobei das Halogen vorzugsweise ein Chlor- oder Iodatom ist,
Y₂ ein Sauerstoff- oder Schwefelheteroatom sind,
R₁ eine Phenyl-, Arylgruppe oder eine Gruppe der Formel (2) darstellt:
-CR₂R₃- (2)
in der:
R₂ und R₃ identisch oder verschieden sind und jeweils unabhängig aus der Gruppe bestehend aus einer linearen oder verzweigten Alkylgruppe, möglicherweise substituiert mit einem oder mehreren Halogenen, ausgewählt sind,
R₄ aus der Gruppe bestehend aus einem Wasserstoffatom, einer Alkyl- oder halogenisierten Alkylgruppe, linear oder verzweigt, zyklisch oder azyklisch, und einer durch die folgende Formel (15) dargestellten Gruppe ausgewählt ist:
-Y₂-CH₂-R₁-CH₂-Z' (15)
in welcher Z', Y₂ und R₁ wie vorstehend definiert sind.

15. Verwendung eines fluorkohlenstoffhaltigen Polymermaterials gemäß einem der Ansprüche 1 bis 5 als Anionen-Austauschmembran.

## Claims

1. A fluorocarbon polymer material which comprises a fluorinated backbone and at least one pendant chain having a quaternary ammonium group, **characterized in that** the backbone comprises a unit of the following general formula (1): 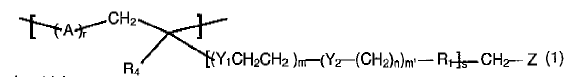 in which:
Z is a quaternary ammonium group,
Y₁ and Y₂ are each independently an oxygen heteroatom or a sulphur heteroatom,
A is a fluorinated or perfluorinated straight chain having from 2 to 6 carbon atoms,
R₁ represents a phenyl or aryl group or a group of the following formula (2):
-CR₂R₃ - (2)
in which:
R₂ and R₃ are identical or different and each selected independently from the group consisting of a straight or branched alkyl group, optionally substituted by one or more halogens,
R₄ is selected from the group consisting of a hydrogen atom, a straight or branched, cyclic or acyclic, alkyl or halogenated alkyl group, and a group represented by the following formula (3): 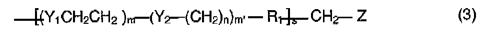
m is an integer comprised between 0 and 10, preferably between 0 and 3;
m', n and r are integers, each independently equal to 0 or 1; and
s is equal to 0 or 1, provided that when s is equal 0, then R₄ is different from the hydrogen atom.

2. The fluorocarbon polymer material according to claim 1, **characterized in that** A is represented by the following formula (4): 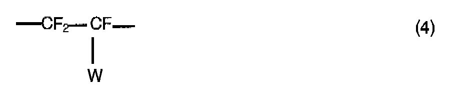 in which:
W represents a fluorine, bromine or chlorine atom, a -CF₃ group or a -OCᵤF₂ᵤ₊₁ group where u is equal to 1, 2 or 3.

3. The fluorocarbon polymer material according to any of claims 1 and 2, **characterized in that** Z is selected from the quaternary ammoniums of the following formula (5):
- N⁺R₅R₆R₇ , X⁻ (5)
in which:
R₅, R₆ and R₇ are identical or different substituents, each selected independently from the group consisting of a straight or branched, cyclic or acyclic, alkyl group, said substituents R₅, R₆ and R₇, taken together with the nitrogen atom to which they are bonded, being able to form a 4- to 7-membered heterocyclic group, having optionally a second heteroatom selected from a nitrogen, oxygen or sulphur atom;
and
X⁻ is a hydroxide or halide counter-ion, preferably a chloride or iodide counter-ion.

4. The fluorocarbon polymer material according to any one of claims 1 to 3, **characterized in that** the backbone comprises at least one unit represented by the following formula (6): 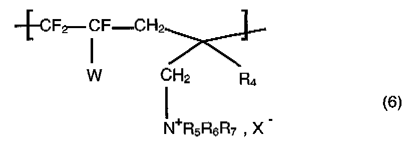 in which:
W represents a fluorine, bromine or chlorine atom, a -CF₃ group or a -OCᵤF₂ᵤ₊₁ group where u is equal to 1, 2 or 3,
R₅, R₆ and R₇ are identical or different substituents, each selected independently from the group consisting of a straight or branched, cyclic or acyclic, alkyl group, said substituents R₅, R₆ and R₇, taken together with the nitrogen atom to which they are bonded, being able to form a 4- to 7-membered heterocyclic group, having optionally a second heteroatom selected from a nitrogen, oxygen or sulphur atom;
X⁻ is a hydroxide or halide counter-ion, preferably a chloride or iodide counter-ion; and
R₄ is selected from the group consisting of a straight or branched, cyclic or acyclic, alkyl or halogenated alkyl group, and a -CH₂- N⁺R₅R₆R₇, X⁻ group.

5. The fluorocarbon polymer material according to claim 4, **characterized in that** the backbone comprises at least one unit represented by the following formula (7): 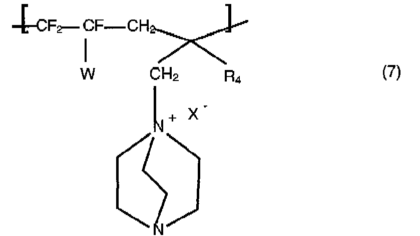 in which
W represents a fluorine, bromine or chlorine atom, a -CF₃ group or a -OCᵤF₂ᵤ₊₁ group where u is equal to 1, 2 or 3,
X⁻ is a hydroxide or halide counter-ion, preferably a chloride or iodide counter-ion; and
R₄ is selected from the group consisting of a straight or branched, cyclic or acyclic, alkyl or halogenated alkyl group, and a group represented by the following formula (8):

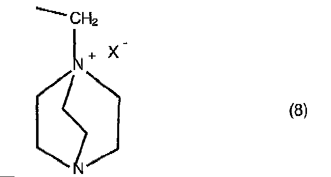

6. A method for synthesizing a fluorocarbon polymer material according to any one of claims 1 to 5, **characterized in that** it comprises a copolymerization step of at least:
- a first monomer selected from fluorinated vinyl monomers and,
- a second monomer represented by the following formula (9): 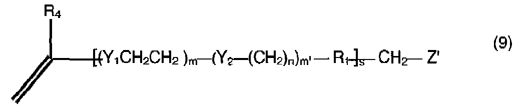 in which
Z' represents a quaternary ammonium group,
Y₁ and Y₂ are each independently an oxygen heteroatom or a sulphur heteroatom,
R₁ represents a phenyl or aryl group or a group of formula (2):
-CR₂R₃ - (2)
in which:
R₂ and R₃ are identical or different and each selected independently from the group consisting of a straight or branched alkyl group, optionally substituted by one or more halogens,
R₄ is selected from the group consisting of a hydrogen atom, a straight or branched, cyclic or acyclic, alkyl or halogenated alkyl group, and a group represented by the following formula (10): 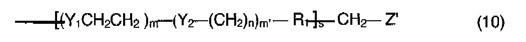 m is an integer comprised between 0 and 10, preferably between 0 and 3;
m' and n are integers, each independently equal to 0 or 1; and
s is equal to 0 or 1, provided that when s is equal to 0, then R₄ is different from the hydrogen atom.

7. A method for synthesizing a fluorocarbon polymer material according to any one of claims 1 to 5, **characterized in that** it comprises a copolymerization step of at least:
- a first monomer selected from fluorinated vinyl monomers and,
- a second monomer represented by the following formula (9): 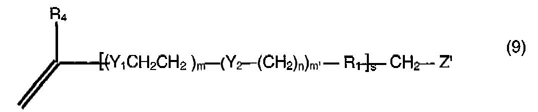 in which
Z' represents a halogen, said halogen being preferably a chlorine or iodine atom,
Y₁ and Y₂ are each independently an oxygen heteroatom or a sulphur heteroatom,
R₁ represents a phenyl or aryl group or a group of formula (2):
-CR₂R₃- (2)
in which:
R₂ and R₃ are identical or different and each selected independently from the group consisting of a straight or branched alkyl group, optionally substituted by one or more halogens,
R₄ is selected from the group consisting of a hydrogen atom, a straight or branched, cyclic or acyclic, alkyl or halogenated alkyl group, and a group represented by the following formula (10): 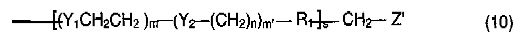 m is an integer comprised between 0 and 10, preferably between 0 and 3;
m' and n are integers, each independently equal to 0 or 1; and
s is equal to 0 or 1, provided that when s is equal to 0, then R₄ is different from the hydrogen atom,
the copolymerization step being followed by a post-functionalization step of the fluorocarbon polymer material originating from the copolymerization step with a tertiary amine.

8. The method according to claim 7, **characterized in that** the tertiary amine is selected from trimethylamine, triethylamine, 1,4-diazabicyclo[2.2.2]octane noted "DABCO" and the tertiary amine of formula NR₅R₆R₇ where R₅, R₆ and R₇ are identical or different substituents, each selected independently from a straight or branched, cyclic or acyclic, alkyl group.

9. The method according to claim 7, **characterized in that** the tertiary amine is the tertiary amine of formula NR₅R₆R₇ where R₅, R₆ and R₇ taken together with the nitrogen atom to which they are bonded, form a 4- to 7- membered heterocyclic group, having optionally a second heteroatom selected from a nitrogen, oxygen or sulphur atom.

10. The method according to any one of claims 6 to 9, **characterized in that** the copolymerization is a radical copolymerization.

11. The method according to any one of claims 6 to 10, **characterized in that** the first monomer is a fluorinated vinyl monomer represented by the following formula (11): 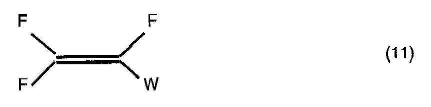 in which:
W represents a fluorine, bromine or chlorine atom, a -CF₃ group or a -OCᵤF₂ᵤ₊₁ group where u is equal to 1, 2 or 3.

12. The method according to any one of claims 6 to 11, **characterized in that** the second monomer is represented by the following formula (12): 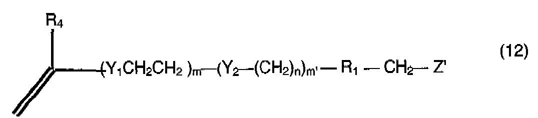 in which
Z' represents a quaternary ammonium group or a halogen, said halogen being preferably a chlorine or iodine atom,
Y₁ and Y₂ are each independently an oxygen heteroatom or a sulphur heteroatom,
R₁ represents a phenyl or aryl group or a group of formula (2):
-CR₂R₃ - (2)
in which:
R₂ and R₃ are identical or different and each selected independently from the group consisting of a straight or branched alkyl group optionally substituted by one or more halogens,
R₄ is selected from the group consisting of a hydrogen atom, a straight or branched, cyclic or acyclic, alkyl or halogenated alkyl group, and a group represented by the following formula (13):
-(Y₁CH₂CH₂)ₘ-(Y₂-(CH₂)ₙ)_{m'}- R₁ -CH₂- Z' (13)
m is an integer comprised between 0 and 10, preferably between 0 and 3; and
m' and n are integers, each independently equal to 0 or 1.

13. The method according to claim 12, **characterized in that** the second monomer is selected from vinyl ethers where each Y₁ and Y₂ is an oxygen atom.

14. The method according to any one of claims 6 to 13, **characterized in that** the second monomer is a vinyl ether represented by the following formula (14): 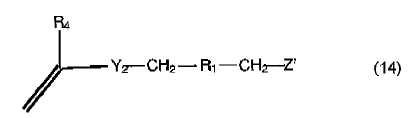 in which
Z' represents a quaternary ammonium group or a halogen, said halogen being preferably a chlorine or iodine atom,
Y₂ is a oxygen heteroatom or sulphur heteroatom,
R₁ represents a phenyl or aryl group or a group of formula (2):
-CR₂R₃ - (2)
in which:
R₂ and R₃ are identical or different and each selected independently from the group consisting of a straight or branched alkyl group, optionally substituted by one or more halogens,
R₄ is selected from the group consisting of a hydrogen atom, a straight or branched, cyclic or acyclic, alkyl or alkyl halogenated group, and a group represented by the following formula (15):
-Y₂-CH₂-R₁-CH₂-Z' (15)
in which Z', Y₂ and R₁ are as defined above.

15. Use of a fluorocarbon polymer material according to any one of claims 1 to 5, as an anion exchange membrane.
